# EUROPÄISCHE PATENTANMELDUNG

(11) **EP 1 106 797 A1**
(43) Veröffentlichungstag der Anmeldung: **13.06.2001**
(21) Anmeldenummer: 00126167.6
(22) Anmeldetag: 30.11.2000
(51) Int. Cl.: F01N 3/021, G01N 25/32

(54) **Messanordnung und Verfahren zur Überwachung der Funktionsfähigkeit eines Russfilters**

(30) Priorität: 10.12.1999 DE 19959870
(71) Anmelder: Heraeus Electro-Nite International N.V., 3530 Houthalen (BE)
(72) Erfinder: Schönauer, Ulrich, Prof. Dr., 76344 Eggenstein (DE)
(74) Vertreter: Kühn, Hans-Christian

(57) **Zusammenfassung**

Die Erfindung betrifft eine Meßanordnung mit einem Rußfilter zum Einsatz in strömenden, Ruß-Partikel mitführenden Gasen und deren Verwendung sowie ein Verfahren zur Überwachung der Funktionsfähigkeit eines in einer Abgasführung angeordneten Rußfilters, wobei mindestens ein Teilstrom eines Abgasstromes mindestens einen, mindestens in Strömungsrichtung offen-porösen Formkörper durchströmt und wobei die Temperatur des Formkörpers mit mindestens einem Temperaturfühler gemessen wird. Es ergibt sich das Problem, eine Meßanordnung und ein Verfahren zu schaffen, mit welchen eine Überwachung der Funktionsfähigkeit eines Rußfilters in zuverlässiger und direkter Weise ermöglicht wird. Das Problem wird für die Meßanordnung dadurch gelöst, daß dem Rußfilter mindestens ein Rußsensor, der mindestens einen, mindestens in Strömungsrichtung offen-porösen Formkörper, mindestens ein elektrisches Heizelement und mindestens einen Temperaturfühler aufweist, zugeordnet ist.

## Beschreibung

Die Erfindung betrifft eine Meßanordnung mit einem Rußfilter zum Einsatz in strömenden, Ruß-Partikel mitführenden Gasen und deren Verwendung sowie ein Verfahren zur Überwachung der Funktionsfähigkeit eines in einer Abgasführung angeordneten Rußfilters, wobei mindestens ein Teilstrom eines Abgasstromes mindestens einen, mindestens in Strömungsrichtung offen-porösen Formkörper durchströmt und wobei die Temperatur des Formkörpers mit mindestens einem Temperaturfühler gemessen wird.

Rußfilter werden überwiegend zur Filterung von Ruß-Partikel enthaltenden Abgasen von Verbrennungsmaschinen, bevorzugt von Dieselmotoren, verwendet. Der Rußfilter setzt sich im Laufe der Zeit mit Ruß-Partikeln zu und muß dann entweder ausgetauscht oder gereinigt werden. Die Reinigung ist dabei die ökonomischere Methode und kann kontinuierlich oder zu einem bestimmten Zeitpunkt erfolgen. Der Zeitpunkt für eine Reinigung kann in festen zeitlichen Abständen oder in Abhängigkeit von der Belegung des Rußfilters gewählt werden.

US 4,404,795 beschreibt ein Verfahren und eine Vorrichtung zur Reduzierung des Partikelausstoßes im Abgas eines Dieselmotors mit Hilfe eines Filters. Mit einer steigenden Anzahl von Ruß-Partikeln im Rußfilter sinkt der freie Filterquerschnitt und es steigt der Abgasdruck vor dem Filter. Die vor dem Filter meßbare Abgasdruckerhöhung wird zu Festsetzung des Zeitpunktes, wann der Filter gereinigt werden soll, verwendet. Ist die maximal zulässige Ruß-Partikel-Konzentration im Rußfilter erreicht, so wird über einen Temperaturfühler bestimmt, wann die Filtertemperatur die Temperatur erreicht, die einen Abbrand der Ruß-Partikel ohne eine zusätzlich eingebrachte Wärmemenge gewährleistet. Bei Erreichen dieser Temperatur wird der Filter am Abgaseingang zusätzlich auf die Zündtemperatur der Ruß-Partikel erhitzt und unter Zugabe von Sekundärluft zur Förderung der Verbrennung der Abbrand gestartet und der Filter gereinigt. Die Bestimmung des Zeitpunktes für die Reinigung des Rußfilters über eine Druckmessung ist ein indirektes Meßverfahren und relativ störanfällig. So führt eine gemessene Druckerhöhung, die nicht auf eine Belegung des Rußfilters mit Ruß zurückzuführen ist, unweigerlich zu einer Fehlinterpretation des Zustandes des Rußfilters und der Durchführung einer unnötigen Reinigung. Eine Reinigung des Rußfilters durch Verbrennung des Rußes sollte jedoch nur so oft wie unbedingt erforderlich durchgeführt werden, da sie zu einem Defekt oder Ausfall des Rußfilters durch Überhitzung führen kann Ein solcher Ausfall kann wiederum von diesem System selbst nicht erkannt werden.

Es ergibt sich das Problem, eine Meßanordnung und ein Verfahren zu schaffen, mit welchen eine Überwachung der Funktionsfähigkeit eines Rußfilters in zuverlässiger und direkter Weise ermöglicht wird.

Das Problem wird für die Meßanordnung dadurch gelöst, daß dem Rußfilter mindestens ein Rußsensor, der mindestens einen, mindestens in Strömungsrichtung offen-porösen Formkörper, mindestens ein elektrisches Heizelement und mindestens einen Temperaturfühler aufweist, zugeordnet ist. Der Rußsensor ermöglicht eine direkte Bestimmung der Rußmenge auf dem Rußfilter.

Der Formkörper kann beispielsweise von einem kompletten Gasstrom, der Ruß-Partikel aufweist, durchströmt werden oder aber nur von einem Teil des Gasstromes durchströmt werden. Der Formkörper soll nicht 100% des Rußes aus dem Gas aufnehmen, also einen Rußfilter nicht ersetzen. Es ist sinnvoll, daß jeweils nur ein Bruchteil des Rußes von dem durchströmten Formkörper aus dem Gas aufgenommen wird und sozusagen eine repräsentative Teilmenge an Ruß-Partikeln aus dem Abgas entnommen wird.

Im Hinblick auf die vielfältigen Gestaltungsmöglichkeiten der Sensorgeometrie des Rußsensors ist darauf zu achten, daß leitfähige Verbindungen wie beispielsweise katalytisch aktives Material oder der Ruß selbst nicht zu Signalstörungen oder Kurzschlüssen führen, die einen einwandfreien Betrieb der Heizelemente sowie der Temperaturfühler gefährden können. Eventuell kann hierzu die Verwendung einer oder mehrerer elektrisch isolierender, Ruß-dichter Schichten zwischen Heizelement und Formkörper beziehungsweise zwischen Temperaturfühler und Formkörper erforderlich sein.

Der Rußsensor kann dabei vor dem Rußfilter, in einem Abgas-Bypass zum Rußfilter oder hinter dem Rußfilter angeordnet sein. Eine Anordnung im Rußfilter ist theoretisch auch möglich, jedoch muß eine ungewollte Zündung der Ruß-Partikel am Rußfilter durch den Rußsensor ausgeschlossen sein. Vorteilhaft ist es aber, wenn ein erster Rußsensor vor und ein zweiter Rußsensor hinter dem Rußfilter angeordnet ist.
Unter einem mindestens in Strömungsrichtung offen-porösen Formkörper ist ganz allgemein ein Körper mit in Strömungsrichtung offener Porosität beziehungsweise durchgehenden Öffnungen oder Löchern zu verstehen, die geordnet oder ungeordnet vorliegen können. Dabei kann es sich um ein einfaches Lochblech, ein Röhrchen, ein Paket aus Fasern oder Wolle, eine poröse Keramik, ein poröses Glas, eine poröse dünne Schicht oder ähnliches handeln. Aber auch eine stark rauhe Oberfläche kann als in Strömungsrichtung offen-poröser Formkörper verwendet werden. Vorteilhaft ist es, wenn der Formkörper der Filtereinheit des Rußfilters ähnelt. Gut eignet sich beispielsweise ein mindestens in Strömungsrichtung offen-poröser Formkörper aus einer Keramik mit wabenförmigem Aufbau, wie sie für Katalysatoren in Kraftfahrzeugen üblicherweise verwendet werden, sowie eine Schaumkeramik. Vorteilhaft ist weiterhin, wenn der Formkörper mindestens teilweise mit einem katalytisch aktiven Material, beispielsweise mit Platin, belegt ist. Dadurch wird die Zündtemperatur des Rußes gesenkt und der Energiebedarf für das elektrische Heizelement vermindert. Eine solche Belegung mit katalytisch aktivem Material ist beispielsweise auch für Kraftfahrzeug-Katalysatoren üblich.

Das elektrische Heizelement und der Temperaturfühler können direkt auf oder in dem Formkörper angeordnet sein. Das elektrische Heizelement, der Temperaturfühler und der Formkörper können aber auch auf einem Träger angeordnet sein. Wichtig ist dabei nur, daß das elektrische Heizelement und der Temperaturfühler thermisch leitend mit dem Formkörper verbunden sind.

Die erfindungsgemäße Verwendung der Meßanordnung in der Abgasführung eines Kraftfahrzeuges zur Überprüfung der Funktionsfähigkeit eines Rußfilters bietet sich besonders an, da der Rußsensor in kleinen Dimensionen und mit geringem Gewicht ausgeführt werden kann. Aber auch eine Verwendung in sonstigen Verbrennungsanlagen, bei denen Abgase mit Ruß-Partikeln erzeugt werden, ist sinnvoll.

Das Problem wird für das Verfahren dadurch gelöst, daß ein Teil der Ruß-Partikel am Formkörper haften bleibt und daß in definierten zeitlichen Abständen der Formkörper mittels eines elektrischen Heizelementes auf die Zündtemperatur des Rußes aufgeheizt wird und daß eine bei Verbrennung von Ruß-Partikeln auftretende Wärmeentwicklung als ein direktes Maß für die Funktionsfähigkeit des Rußfilters verwendet wird. Der Formkörper kann beispielsweise von dem gesamten Abgas durchströmt oder aber nur von einem Teil des Abgases durchströmt werden. Der Formkörper soll aber nicht einen Rußfilter ersetzen. Es ist sinnvoll, daß jeweils nur ein Bruchteil des Rußes von dem durchströmten Formkörper aus dem Abgas gefiltert wird und sozusagen eine repräsentative Teilmenge an Ruß-Partikeln aus dem Abgas entnommen wird.

Dabei können die zeitlichen Abstände, in denen der Formkörper mit dem elektrischen Heizelement aufgeheizt wird, fest gewählt werden. Aber auch variable zeitliche Abstände, die aufgrund einer Auswertung von Betriebsdaten gewählt werden können, können sinnvoll sein. Für einen Rußfilter in der Abgasführung eines Dieselmotors könnte das beispielsweise bedeuten, daß die Aufheizung des Formkörpers nach einer vorbestimmten Anzahl an Kaltstarts oder in Abhängigkeit vom verbrauchten Dieselkraftstoff gestartet wird. Unter Betriebsdaten sind demnach allgemein Informationen zu verstehen, die die Erzeugung des Abgases betreffen und in irgendeinen Zusammenhang mit einer Rußentwicklung im Abgas gesetzt werden können.

Zum einen ist es möglich, daß nach Erreichen der Zündtemperatur des Rußes am Formkörper das elektrische Heizelement mit einer gleichbleibenden Heizleistung betrieben wird, daß die durch die Verbrennung von Ruß-Partikeln auftretende Wärmeentwicklung mit dem Temperaturfühler gemessen wird, daß der Temperaturanstieg als direktes Maß für die verbrannte Menge an Ruß-Partikeln am Formkörper ausgewertet wird und daß daraus die Funktionsfähigkeit des Rußfilters bestimmt wird. Dazu ist eine intelligente Steuerung notwendig, die den Temperaturanstieg über eine vorgegebene Rechenroutine in eine Rußmenge umrechnen kann. Die Rußmenge, die am Formkörper verbrennt, ist proportional der Rußmenge, die seit dem letzten Aufheizen am Formkörpers vorbeigeströmt ist.

Zum anderen kann nach Erreichen der Zündtemperatur des Rußes am Formkörper die Temperatur des Formkörpers mittels Zurücknahme der Heizleistung des elektrischen Heizelementes weitgehend isotherm gehalten werden und die Verminderung der Heizleistung als direktes Maß für die verbrannte Menge an Ruß-Partikeln am Formkörper ausgewertet werden und daraus die Funktionsfähigkeit des Rußfilters bestimmt werden. Auch hier ist eine intelligente Steuerung erforderlich.

Wird ein Formkörper in Strömungsrichtung vor dem Rußfilter angeordnet, so kann nach Erreichen der Zündtemperatur des Rußes bei Auftreten einer Wärmeentwicklung an dem Formkörper die Belegung des Rußfilters mit Ruß-Partikeln ermittelt werden.
Nach Auswertung des Temperaturanstieges oder der Heizleistungsänderung und Umrechnung in eine verbrannte Menge an Ruß am Formkörper vor dem Rußfilter wird auf die Belegung des Rußfilters selbst geschlossen. Dazu muß in der intelligenten Steuerung ein Korrelations-Schema, das den Zusammenhang zwischen Ablagerungen am Formkörper und der Belegung des Rußfilters enthält. hinterlegt sein. Ist eine Rußmenge am Formkörper errechnet worden, die über einem für die Belegung des Rußsensors zulässigen, vorgegebenen Grenzwert liegt, so wird von der Steuerung eine Reinigung des Rußfilters gestartet. Ist für einen Rußfilter aber eine Reinigungsfunktion nicht vorgesehen, so kann bei Erreichen oder Überschreiten des Grenzwertes eine Meldung, beispielsweise mit einer Warnleuchte oder einem akustischen Signal, ausgegeben werden, daß der Rußfilter gewechselt werden muß.
Ist aber eine Rußmenge am Formkörper errechnet worden, die unter einem für die Belegung des Rußfilters zulässigen, vorgegebenen Grenzwert liegt, so wird von der Steuerung keine Reinigung des Rußfilters bzw. keine Ausgabe einer Meldung gestartet, sondern der errechnete Wert für die Rußmenge gespeichert. Eine nachfolgend gestartete, in einem bestimmten Abstand von dieser ersten Bestimmung der Rußmenge am Formkörper wiederholte zweite Bestimmung der Rußmenge am Formkörper muß nun im Zusammenhang mit der ersten Bestimmung beziehungsweise dem zu diesem Zweck gespeicherten Wert behandelt werden. Die aus der zweiten Bestimmung errechnete Rußmenge muß über die Steuerung zu dem gespeicherten Wert addiert werden, da in diesem Fall nur die Summe der beiden Werte im Korrelations-Schema den richtigen Wert für die Belegung des Rußfilters liefert. Ist der Grenzwert auch nach der zweiten Bestimmung noch nicht überschritten, so muß die Summe aus beiden Bestimmungen gespeichert und für nachfolgende Berechnungen gemäß obigem Schema weiterverwendet werden.

Wird ein Formkörper in Strömungsrichtung hinter dem Rußfilter angeordnet, so kann nach Erreichen der Zündtemperatur des Rußes bei Auftreten einer Wärmeentwicklung eine Undichtigkeit des Rußfilters festgestellt werden und ein Warnsignal ausgegeben werden, das den Defekt des Rußfilters anzeigt, wenn die Wärmeentwicklung einen vorgegebenen Grenzwert überschreitet. Solche Undichtigkeiten treten beispielsweise nach einem Ausfall des Rußfilters durch Bruch auf. Nach Auswertung des Temperaturanstieges oder der Heizleistungsänderung und Umrechnung in eine verbrannte Menge an Ruß am Formkörper hinter dem Rußfilter wird der errechnete Wert mit einem hinterlegten Grenzwert, der sich meist aus gesetzlich vorgegebenen Grenzwerten ergibt, verglichen. Ist eine Rußmenge am Formkörper errechnet worden, die eine unzureichende Filterwirkung des Rußfilters aufgrund einer Überschreitung des zulässigen, vorgegebenen Grenzwertes anzeigt, so wird ein Warnsignal ausgegeben, daß ein Defekt des Rußfilter vorliegt und dieser ausgetauscht werden muß.

Wird ein erster Formkörper in Strömungsrichtung vor dem Rußfilter und ein zweiter Formkörper in Strömungsrichtung hinter dem Rußfilter angeordnet, so kann nach Erreichen der Zündtemperatur des Rußes bei Auftreten einer Wärmeentwicklung am ersten Formkörper die Belegung des Rußfilters mit Ruß-Partikeln ermittelt werden und nach Erreichen der Zündtemperatur bei Auftreten einer Wärmeentwicklung am zweiten Formkörper eine Undichtigkeit des Rußfilters festgestellt werden und ein Warnsignal ausgegeben werden, das den Defekt des Rußfilters anzeigt, wenn die Wärmeentwicklung einen vorgegebenen Grenzwert überschreitet.

Werden zwei oder mehr Rußsensoren verwendet, so muß die Auswertung der jeweiligen Sensorsignale nicht an jedem der Rußsensoren in gleicher Weise erfolgen, sondern es können auch unterschiedliche Auswertemethoden verwendet werden.

Möglich ist auch die Anordnung eines Formkörpers in einem Abgas-Bypass zum Rußfilter, wo nach Erreichen der Zündtemperatur des Rußes bei Auftreten einer Wärmeentwicklung an dem Formkörper die Belegung des Rußfilters mit Ruß-Partikeln ermittelt werden kann. Die Auswertung erfolgt hier wie bei einer Anordnung des Formkörpers vor dem Rußfilter.

Folgende sieben Figuren sollen die erfindungsgemäße Meßanordnung und das Verfahren beispielhaft erläutern. Es sei ausdrücklich hinzugefügt, daß nicht nur ein planarer Aufbau des Rußsensors, wie er hier gezeigt wird, möglich ist. Auch die Anordnung des Formkörpers auf einem Stab oder einem Rohr oder die Verwendung eines massiven, selbsttragenden Formkörpers ist möglich.
- Fig. 1: Einfacher Rußsensor auf einem Träger
- Fig. 2: Rußsensor mit einem Heizelement in einem rußfreien Gasraum
- Fig. 3: Rußsensor mit einem zusätzlichen Temperaturfühler in einem rußfreien Gasraum
- Fig. 4: Rußsensor mit einem zusätzlichen Temperaturfühler und einem zusätzlichen Heizelement im Abgasstrom sowie einem zusätzlichen Temperaturfühler in einem rußfreien Gasraum
- Fig. 5: Diagramm zur Messung des Temperaturverlaufes des Formkörpers mit und ohne Ruß
- Fig. 6: Schematische Darstellung mit zwei Rußsensoren in einer Abgasführung
- Fig. 7: Schematische Darstellung mit einem Rußsensor in einem Bypass zur Abgasführung und einem zweiten Rußsensor in einer Abgasführung

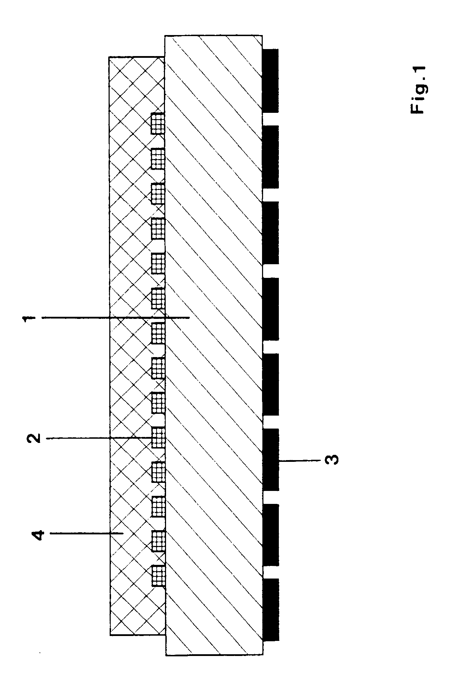

Fig. 1 zeigt einen Rußsensor im Querschnitt mit einen Träger 1 aus Al₂O₃-Keramik. Auf einer Seite des Trägers 1 ist ein mäanderförmiger Temperaturfühler 2, hier ein Platin-Widerstandselement in Dünnfilmtechnik, angeordnet. Dieser Temperaturfühler 2 ist von einem offen-porösen keramischen Formkörper 4 aus Al₂O₃ überdeckt. Auf der anderen Seite des Trägers 1 ist ein mäanderförmiges Heizelement 3 angeordnet.

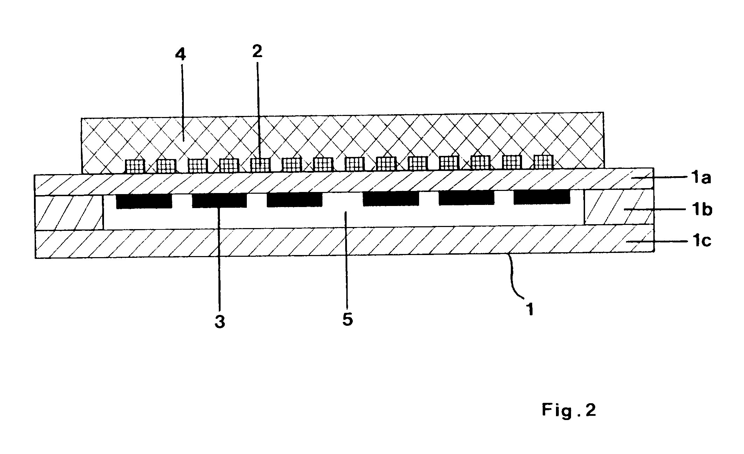

Fig. 2 zeigt einen Rußsensor im Querschnitt mit einem Träger 1, welcher in Laminattechnik aus den gasdichten, keramischen Folien 1a; 1b; 1c hergestellt ist. Auf einer Seite des Trägers 1 ist ein mäanderförmiger Temperaturfühler 2, überdeckt von einem einem offen-porösen keramischen Formkörper 4, angeordnet. Der Träger 1 bildet einen rußfreien Gasraum 5, in welchem ein mäanderförmiges Heizelement 3 geschützt angeordnet ist.

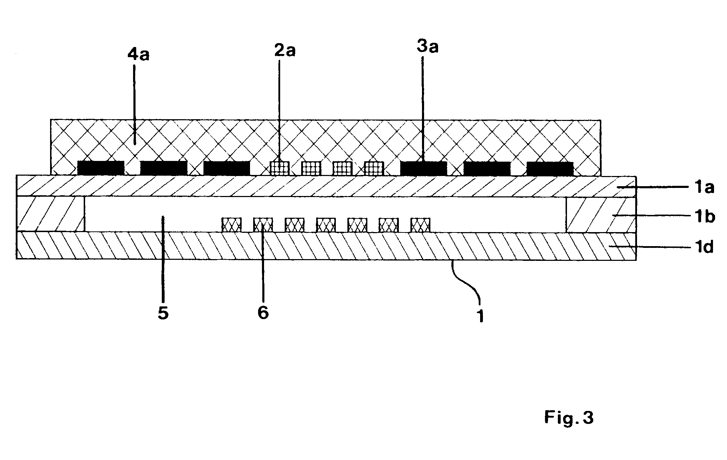

Fig. 3 zeigt einen Rußsensor im Querschnitt mit einem Träger 1 aus Al₂O₃, welcher in Laminattechnik aus den gasdichten, keramischen Folien 1a; 1b und der gasdurchlässigen, keramischen Folie 1d hergestellt ist. Auf einer Seite des Trägers 1 ist ein mäanderförmiger Temperaturfühler 2a. umgeben von einem mäanderförmigen Heizelement 3a, angeordnet. Überdeckt werden die einzelnen Bahnen des Temperaturfühlers 2a und des Heizelementes 3a von einer hier nicht dargestellten, elektrisch isolierenden, Ruß-dichten dünnen Schicht aus Al₂O₃, welche widerum von dem offen-porösen keramischen Formkörper 4a bedeckt ist. Die Porenoberflächen des Formkörpers 4a sind mit einem katalytisch aktiven Material, hier Platin, belegt. Der Träger 1 bildet einen rußfreien Gasraum 5, in welchem ein zusätzlicher Temperaturfühler 6 zur unabhängigen Messung der Abgastemperatur angeordnet ist. Die gasdurchlässige, keramische Folie 1d ermöglicht einen Zutritt des Abgases ohne Ruß-Partikel in den Gasraum 5 und trägt damit zur Erhöhung der Ansprechgeschwindigkeit des zusätzliches Temperaturfühlers 6 bei.

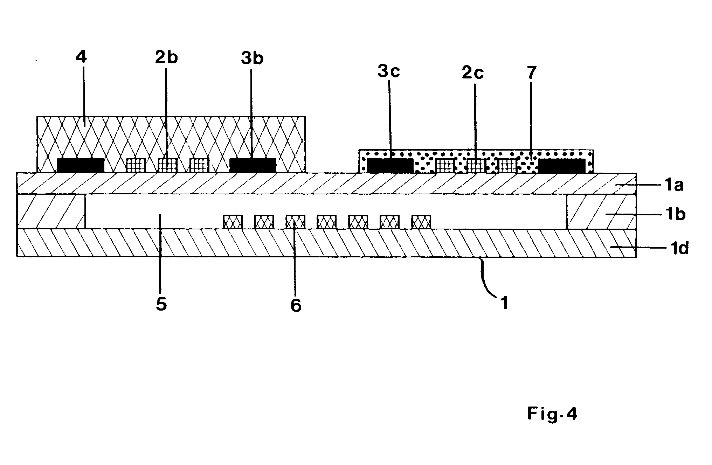

Fig. 4 zeigt einen Rußsensor im Querschnitt mit einem Träger 1, welcher in Laminattechnik aus den gasdichten, keramischen Folien 1a; 1b und der gasdurchlässigen, keramischen Folie 1d hergestellt ist. Auf einer Seite des Trägers 1 ist ein mäanderförmiger Temperaturfühler 2b, umgeben von einem ringförmigen Heizelement 3b, angeordnet. Überdeckt werden der Temperaturfühler 2b und das Heizelement 3b von einem offen-porösen keramischen Formkörper 4. Auf dieser Seite des Trägers 1 ist ein weiterer mäanderförmiger Temperaturfühler 2c, umgeben von einem ringförmigen Heizelement 3c, angeordnet. Der Temperaturfühler 2c und Heizelement 3c sind mit einer Ruß-dichten Schutzschicht 7 belegt. Der parallele Betrieb der Temperaturfühler 2b ;2c und der Heizelemente 3b ;3c ermöglicht eine Differenz-Messung. Dabei werden über eine Steuerung die Heizelemente 3b und 3c in gleicher Weise betrieben und bei Erreichen der Zündtemperatur des Rußes das gemessene Signal des Temperaturfühlers 2c von dem des Temperaturfühlers 2b subtrahiert. Es resultiert ein Meßergebnis, das eindeutig und mit hoher Genauigkeit der Wärmeentwicklung zugeordnet werden kann, die aufgrund der Verbrennung des Rußes entsteht. Der Träger 1 bildet einen rußfreien Gasraum 5, in welchem ein zusätzlicher Temperaturfühler zur unabhängigen Messung der Abgastemperatur angeordnet ist. Die gasdurchlässige, keramische Folie 1d ermöglicht einen Zutritt des Abgases ohne Ruß-Partikel in den Gasraum 5 und trägt damit zur Erhöhung der Ansprechgeschwindigkeit des zusätzliches Temperaturfühlers 6 bei.

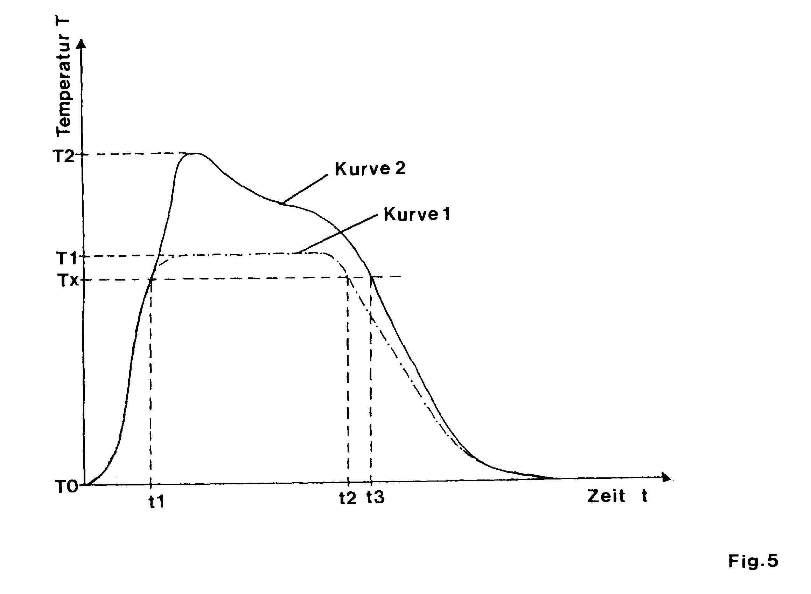

Fig. 5 zeigt den Temperaturverlauf eines Formkörpers, wie ihn Fig. 1 zeigt, der mit einem Heizelement ausgehend von einer Temperatur T0 in der Abgasführung eines Diesel-Kraftfahrzeuges erhitzt wird. Diese Temperatur T0 kann generell gleichbedeutend sein mit der Kaltstart-Temperatur des Motors oder mit einer beliebigen Temperatur des Abgasstromes. Hier wird der Fall betrachtet, daß der Formkörper während des Vorglüh-Vorganges beim Kaltstart des Kraftfahrzeuges auf die Zündtemperatur des Rußes erhitzt wird. Eine rasche Änderung der Umgebungstemperatur welche die Messung beeinflussen würde und daher registriert und kompensiert werden müßte, ist zu diesem Zeitpunkt ( also vor Start des Motors ) nicht zu befürchten. Somit ist eine zusätzliche Messung der Umgebungstemperatur in diesem Fall nicht erforderlich. Kurve 1 zeigt den mit einem Temperaturfühler aufgenommenen Temperaturverlauf des Formkörpers ohne Rußbelag, wobei die Heizleistung des Heizelementes über eine Zeit t konstant gehalten wird. Diese Kurve 1 stellt eine Referenzkurve dar, die immer in der Steuerung des Kraftfahrzeuges für die Auswertung der Kurven mit Ruß hinterlegt werden sollte.
Kurve 2 zeigt den mit dem gleichen Temperaturfühler aufgenommenen Temperaturverlauf des Formkörpers mit Rußbelag, wobei die Heizleistung des Heizelementes über eine Zeit t konstant gehalten wird. Aufgrund der Verbrennung des Rußes werden in Kurve 2 höhere Temperaturen erreicht als in Kurve 1. Die Differenz zwischen den Maximaltemperaturen T1 und T2 der Kurven 1 und 2 kann zur Berechnung der Rußmenge am Formkörper verwendet und dieser Wert über ein in der Steuerung hinterlegtes Korrelations-Schema, welches vorab speziell für den verwendeten Meßaufbau und die verwendeten Materialien des Rußfilters und des Rußsensors ermittelt wurde, mit der auf einem nachgeschalteten Rußfilter befindlichen Rußmenge in Zusammenhang gebracht werden. Selbstverständlich ist für einen Durchschnittsfachmann aber eine solche mathematische Auswertung der Kurven auch über ihre Steigung, eine Integralbildung oder eine zeitliche Auswertung in bekannter Weise möglich. So kann beispielsweise für Kurve 1 eine Zeit t2 - t1 bestimmt werden und für Kurve 2 eine Zeit t3 - t1 bestimmt werden, die anzeigt, wie lange der Rußsensor eine Temperatur T oberhalb einer Temperatur Tx aufweist. Wird eine Temperatur Tx etwas unterhalb T1 gewählt, so zeigen sich die Unterschiede zwischen der Zeit t2 -t1 und der Zeit t3 - t1 am deutlichsten. Eine Differenz zwischen den Zeiten (t2 - t1) und (t3 - t1), welche eine aufgrund der Verbrennung von Ruß am Rußsensor, dargestellt in Kurve 2, spätere Abkühlung anzeigt, kann mit der verbrannten Menge an Ruß korreliert werden, indem ein Wert t2 - t1 für eine Temperatur Tx eines unbelegten Sensors zu Vergleichszwecken in einer Steuerung hinterlegt wird und bei einer Temperatur Tx am Rußsensor die Zeit t3 - t1 bestimmt wird und die Differenz mit Hilfe des hinterlegten Wertes gebildet wird.

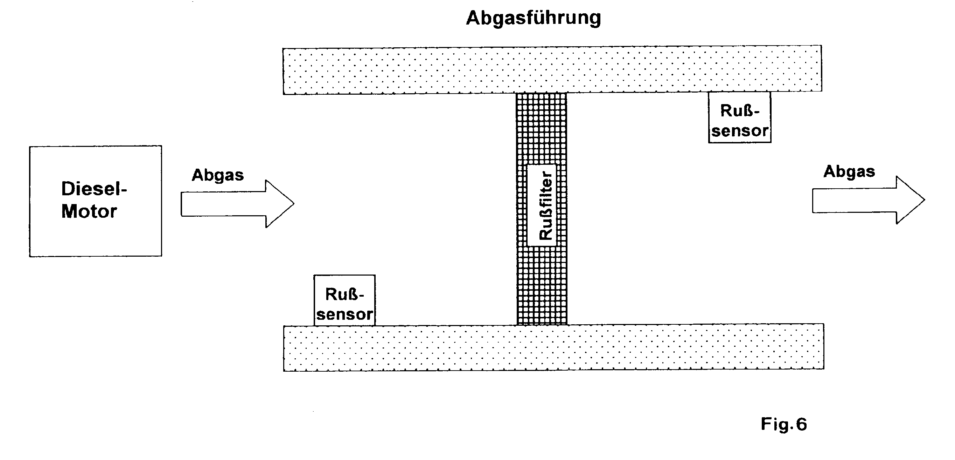

Fig. 6 zeigt eine schematische Darstellung mit zwei Rußsensoren in einer Abgasführung. Das vom Dieselmotor ausgestoßene rußhaltige Abgas wird in die Abgasführung eingeleitet. Ein Teil des Abgasstromes strömt an einem im Strömungsrichtung vor einem Rußfilter angeordneten Rußsensor vorbei und durchströmt dessen offen-porösen Formkörper. Dabei wird ein kleiner Teil des im Abgas befindlichen Rußes auf dem offen-porösen Formkörper abgeschieden. Mit diesem vor dem Rußfilter angeordneten Rußsensor kann in oben beschriebener Weise die Belegung des Rußfilters bestimmt und so bei Bedarf die Reinigung des Rußfilters veranlaßt werden. Das Abgas trifft nach dem ersten Rußsensor auf den Rußfilter, welchen es durchströmen muß. In Strömungsrichtung nach dem Rußfilter befindet sich in der Abgasführung ein zweiter Rußsensor, den das über den Rußfilter gereinigte Abgas streift. Dieser zweite Rußsensor wird zur Detektion von Undichtigkeiten des Rußfilters verwendet.

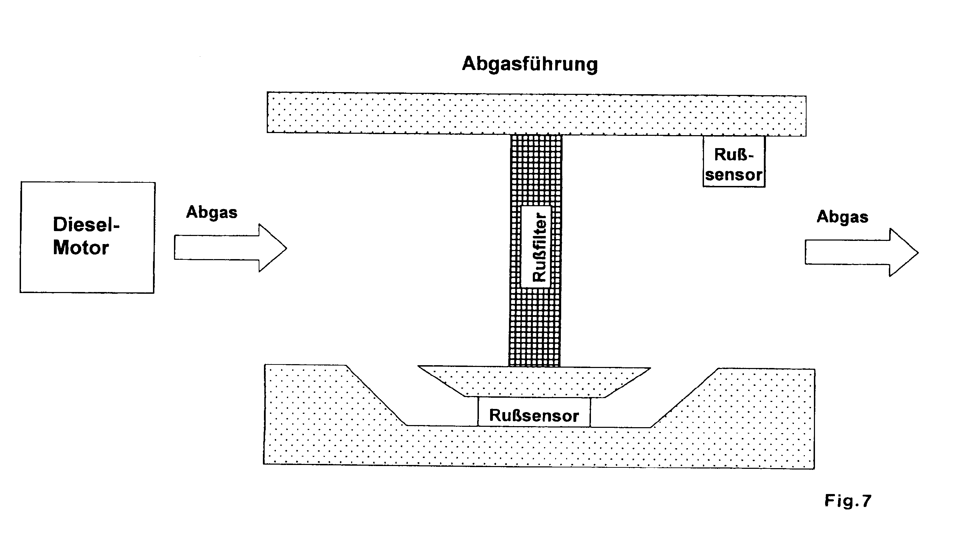

Fig. 7 zeigt eine schematische Darstellung mit einem Rußsensor in einem Abgas-Bypass zum Rußfilter und einem zweiten Rußsensor in der Abgasführung in Strömingsrichtung nach dem Rußsensor. Die Funktion des Rußsensor im Abgas-Bypass ist mit der des in Strömungsrichtung ersten Rußsensors aus Fig. 6 identisch.

## Patentansprüche

1. Meßanordnung mit einem Rußfilter zum Einsatz in strömenden, Ruß-Partikel mitführenden Gasen, dadurch gekennzeichnet, daß dem Rußfilter mindestens ein Rußsensor, der mindestens einen, mindestens in Strömungsrichtung offen-porösen Formkörper ( 4 ), mindestens ein elektrisches Heizelement ( 3; 3a; 3b; 3c ) und mindestens einen Temperaturfühler ( 2; 2a; 2b; 2c ) aufweist, zugeordnet ist.

2. Meßanordnung nach Anspruch 1, dadurch gekennzeichnet, daß der Rußsensor vor dem Rußfilter angeordnet ist.

3. Meßanordnung nach Anspruch 1, dadurch gekennzeichnet, daß der Rußsensor in einem Abgas-Bypass zum Rußfilter angeordnet ist.

4. Meßanordnung nach Anspruch 1, dadurch gekennzeichnet, daß der Rußsensor hinter dem Rußfilter angeordnet ist.

5. Meßanordnung nach Anspruch 1, dadurch gekennzeichnet, daß ein erster Rußsensor vor und ein zweiter Rußsensor hinter dem Rußfilter angeordnet ist.

6. Meßanordnung nach mindestens einem der Ansprüche 1 bis 5, dadurch gekennzeichnet, daß der mindestens in Strömungsrichtung offen-poröse Formkörper (4) aus einer Keramik mit wabenförmigem Aufbau gebildet ist.

7. Meßanordnung nach mindestens einem der Ansprüche 1 bis 6, dadurch gekennzeichnet, daß der Formkörper ( 4 ) mindestens teilweise mit einem katalytisch aktiven Material belegt ist.

8. Meßanordnung nach einem der Ansprüche 1 bis 7, dadurch gekennzeichnet, daß das elektrische Heizelement ( 3; 3a; 3b; 3c ) und der Temperaturfühler ( 2; 2a; 2b; 2c ) direkt auf oder in dem Formkörper ( 4 ) angeordnet sind.

9. Meßanordnung nach mindestens einem der Ansprüche 1 bis 8, dadurch gekennzeichnet, daß das elektrische Heizelement ( 3; 3a; 3b; 3c ), der Temperaturfühler ( 2; 2a; 2b; 2c ) und der Formkörper ( 4) auf einem Träger ( 1; 1a; 1b; 1c; 1d ) angeordnet sind.

10. Verwendung der Meßanordnung nach mindestens einem der Ansprüche 1 bis 9 in der Abgasführung eines Kraftfahrzeuges zur Überprüfung der Funktionsfähigkeit eines Rußfilters.

11. Verfahren zur Überwachung der Funktionsfähigkeit eines in einer Abgasführung angeordneten Rußfilters, wobei mindestens ein Teilstrom eines Ruß-Partikel mitführenden Abgasstromes mindestens einen, mindestens in Strömungsrichtung offen-porösen Formkörper durchströmt und wobei die Temperatur des Formkörpers mit mindestens einem Temperaturfühler gemessen wird, dadurch gekennzeichnet, daß ein Teil der Ruß-Partikel am Formkörper ( 4 ) haften bleibt und daß in definierten zeitlichen Abständen der Formkörper ( 4 ) mittels eines elektrischen Heizelementes ( 3; 3a; 3b ) auf die Zündtemperatur des Rußes aufgeheizt wird und daß eine bei Verbrennung von Ruß-Partikeln auftretende Wärmeentwicklung als ein direktes Maß für die Funktionsfähigkeit des Rußfilters verwendet wird.

12. Verfahren nach Anspruch 11, dadurch gekennzeichnet, daß die zeitlichen Abstände fest gewählt werden.

13. Verfahren nach Anspruch 11, dadurch gekennzeichnet, daß die zeitlichen Abstände aufgrund einer Auswertung von Betriebsdaten gewählt werden.

14. Verfahren nach einem der Ansprüche 11 bis 13, dadurch gekennzeichnet, daß nach Erreichen der Zündtemperatur des Rußes am Formkörper ( 4 ) das elektrische Heizelement ( 3; 3a; 3b ) mit einer gleichbleibenden Heizleistung betrieben wird, daß die durch die Verbrennung von Ruß-Partikeln auftretende Wärmeentwicklung mit dem Temperaturfühler ( 2; 2a; 2b ) gemessen wird, daß der Temperaturanstieg als direktes Maß für die verbrannte Menge an Ruß-Partikeln am Formkörper ( 4 ) ausgewertet wird und daß daraus die Funktionsfähigkeit des Rußfilters bestimmt wird.

15. Verfahren nach einem der Ansprüche 11 bis 13, dadurch gekennzeichnet, daß nach Erreichen der Zündtemperatur des Rußes am Formkörper ( 4) die Temperatur des Formkörpers ( 4) mittels Zurücknahme der Heizleistung des elektrischen Heizelementes ( 3; 3a; 3b ) weitgehend isotherm gehalten wird und die Heizleistung als direktes Maß für die verbrannte Menge an Ruß-Partikeln am Formkörper ( 4 ) ausgewertet wird und daß daraus die Funktionsfähigkeit des Rußfilters bestimmt wird.

16. Verfahren nach mindestens einem der Ansprüche 11 bis 15, dadurch gekennzeichnet, daß der Formkörper ( 4 ) in Strömungsrichtung vor dem Rußfilter angeordnet wird und daß nach Erreichen der Zündtemperatur des Rußes bei Auftreten einer Wärmeentwicklung an dem Formkörper ( 4 ) eine Belegung des Rußfilters mit Ruß-Partikeln ermittelt wird.

17. Verfahren nach mindestens einem der Ansprüche 11 bis 15, dadurch gekennzeichnet, daß der Formkörper ( 4 ) in Strömungsrichtung hinter dem Rußfilter angeordnet wird und daß nach Erreichen der Zündtemperatur des Rußes bei Auftreten einer Wärmeentwicklung an dem Formkörper ( 4 ) eine Undichtigkeit des Rußfilters festgestellt wird und daß ein Warnsignal ausgegeben, das den Defekt des Rußfilters anzeigt, wenn die Wärmeentwicklung einen vorgegebenen Grenzwert überschreitet.

18. Verfahren nach mindestens einem der Ansprüche 11 bis 15, dadurch gekennzeichnet, daß ein erster Formkörper ( 4 ) in Strömungsrichtung vor dem Rußfilter und ein zweiter Formkörper ( 4 ) in Strömungsrichtung hinter dem Rußfilter angeordnet wird und daß nach Erreichen der Zündtemperatur des Rußes bei Auftreten einer Wärmeentwicklung am ersten Formkörper ( 4 ) die Belegung des Rußfilters mit Ruß-Partikeln ermittelt wird und daß nach Erreichen der Zündtemperatur bei Auftreten einer Wärmeentwicklung am zweiten Formkörper ( 4 ) eine Undichtigkeit des Rußfilter festgestellt wird und daß ein Warnsignal ausgegeben wird, das den Defekt des Rußfilters anzeigt, wenn die Wärmeentwicklung einen vorgegebenen Grenzwert überschreitet.

19. Verfahren nach mindestens einem der Ansprüche 11 bis 15, dadurch gekennzeichnet, daß der Formkörper ( 4 ) in einem Abgas-Bypass zum Rußfilter angeordnet wird und daß nach Erreichen der Zündtemperatur des Rußes bei Auftreten einer Wärmeentwicklung an dem Formkörper ( 4 ) die Belegung des Rußfilters mit Ruß-Partikeln ermittelt wird.
